# EUROPEAN PATENT SPECIFICATION

(11) **EP 0 679 419 B1**
(45) Date of publication and mention of the grant of the patent: **02.02.2000**
(21) Application number: 95400943.7
(22) Date of filing: 26.04.1995
(51) Int. Cl.: B01D 11/00, B01D 11/04, C12C 3/00

(54) **Extraction of hops**
Extraktion von Hopfen
Extraction du houblon

(30) Priority: 28.04.1994 GB 9408504
(43) Date of publication of application: 02.11.1995
(73) Proprietor: STEINER HOPS LIMITED, Epping Essex CM16 4DA (GB)
(72) Inventor: Smith, Gerald W., Thaxted, Essex (GB)
(74) Representative: Dubois-Chabert, Guy

(56) References cited:
- DE-A- 3 316 705
- DE-A- 3 508 140
- DE-C- 3 838 952
- US-A- 4 104 409
- US-A- 4 218 491

## Description

### Background of the Invention

The present invention relates to improvements in extraction systems. The invention has particular utility in the extraction of hops using supercritical carbon dioxide, and will be described in connection with such utility, although the invention is applicable to extraction of other materials using supercritical CO₂ or other supercritical gases as the extraction medium, and/or the extraction of hops using supercritical gases other than CO₂ as the extraction medium.

Hops are used in the preparation of beer, ale and other malt beverages to impart certain properties to the flavor of the finished product. Sometimes whole or ground hops are added to the brew wort and the residues are removed after the mixture is boiled for the desired length of time. This procedure has been objected to as cumbersome, wasteful and time consuming. Hops are a natural product and may vary in quality. They also are subject to degradation and may produce different flavors in successive batches of beer.

In the prior art, it has been proposed to extract various constituents from hops and to use these extracted constituents in place of hops themselves in making beer. For example, Klingel et al U.S. Pat. No. 3,364,265 describe treating a hexane extract of hops with dilute aqueous sodium hydroxide, thereafter separating the aqueous layer and recovering the alpha acids therefrom. In traditional beer making typically only 25% to 35% of the alpha acids in the original hops are utilized. By extracting the alpha acids, isomerizing them separately from the beer, and adding the iso-alpha acids produced to the beer after fermentation alpha acid utilization can be much higher, typically from 60% to 85%. A further advantage in using alpha acids extracts is that they can be stored for longer periods without the usual degradation (especially of the bitter principals including the alpha acids) that occurs in hops under extended storage. On the other hand, the Klingel et al process is based on the partition of the extract products between two immiscible solvents and due to partition coefficient may result in a loss of alpha acids values. Also, special equipment is required for separation of the immiscible solvents containing the extracts.

The art also has proposed hop extraction procedures which involve the use of certain common organic solvents such as methylene chloride, trichloroethylene, hexane and/or lower alphiphatic alcohols such as methanol. However, these solvents will readily dissolve not only the desired alpha-acids contents of the hops but in addition relatively large proportions of beta acids, tannins, chlorophyll and various other hop constituents. Thus, in order to obtain high quality alpha acids suitable for isomerization the crude extract has to be further treated to purify the extract. For example, Grant U.S. Patent No. 3,787,499 teaches preparing a hop extract by contacting the hops with a polar solvent having a solubility in water of at least 1%, concentrating the solvent, and treating the concentrated extract solution with an aqueous solution of alkali metal hydroxide to precipitate the hop resins and beta acids which can then be removed, for example, by filtering. Useful as polar solvents are mentioned methanol, ethanol, 1-propanol, 2-propanol, 1-butanol, methylene chloride and trichloroethylene. However, according to Laws et al U.S. Patent No. 4,218,491, it is difficult to remove entirely the organic solvent from the extract; thus commercial extracts reportedly may contain over 1% by weight solvent. Whilst it is believed that residual solvents such as methanol or methylene chloride may be lost entirely during beer making, it is not considered wholly satisfactory to rely on such "accidental" elimination of possibly noxious materials in the production of a foodstuff.

Recently, carbon dioxide either as a liquid or supercritical gas has gained favor as an extraction medium of choice for hops. British Patent Specification No. 1388581 describes making a hop extract by extracting hops with a variety of gases in the supercritical state with respect to temperature and pressure. Carbon dioxide is stated to be the preferred gas. Extraction under supercritical conditions with carbon dioxide reportedly yields an olive-green pasty product which contains alpha acids, beta acids, uncharacterized soft resins, hard resins and small quantities of tannins. While extraction conditions can be varied to favor yields of alpha acids proportionately higher than the concentrations in the starting hops, the best quality, i.e. purest extracts typically contain only about one-third alpha acids. According to British Patent 1388581 optimum extraction conditions involve extraction under pressure substantially in excess of the critical pressure, which for carbon dioxide is about 72.8 atmospheres, preferably in excess of 100 atmospheres (gauge) and temperatures of from 40° to 50°C. The extract thus resulting compares favorably with primary extracts obtained using organic solvents and generally is suitable for use in brewing beer, e.g. by addition to the kettle. On the other hand, the extract resulting from such processing generally is not suitable for isomerization without considerable purification to remove components which would produce undesirable compounds under typical isomerization conditions. However, such purification may require the use of organic solvents, thus negating one of the main advantages (freedom from organic solvent residues and high yields) of using supercritical carbon dioxide in the extraction of hops. See also Vitzthurn et al, U.S. Patent No. 4,104,409.

The use of liquid carbon dioxide as an extraction medium for hops also is described in USSR Author's Certificate No. 167798 in the name of Pekhov, Ponamarenko and Prokopchuk and by Pekhov in Masloboino Zhirovanaya Promyshlemnost Vol. 34, part 10 (1968) pages 26 to 29. According to Pekhov et al, the product obtained by extraction of hops with liquid carbon dioxide at elevated pressures and temperatures of from 20° to 25°C is a light brown viscous mass (which is described later might be due to iron contamination). The purity and stability of such carbon dioxide extracts is not altogether certain; however, it is believed possible to use them in beer making by addition to the kettle.

Shafton and Naboka in ISU Sev-Kauk Nauchn Tsentra UGssh Shk, Ser Tekh Nauk 1975, 3(3), 29-31[Chem Abs Vol 84 (1976) 120046 a] referring to the work of Pekhov et al describe extracts of hops as complex mixtures of alpha-, beta- and gamma-acids, alpha-, beta- and gamma-soft resins and hard resins which are subjected to substantial deterioration, especially by fairly rapid autoxidation on storage. Such extracts could not be isomerized to give an iso-alpha acid preparation without substantial purification and, in any event, are considerably less stable under storage than conventional hop extracts made using organic solvents.

See also Laws et al U.S. Patent No. 4,218,491, which describes preparing a hop extract by passing liquid carbon dioxide at elevated pressure and at temperatures of from -5°C to +15°C through a column of hop material to extract the alpha acids content thereof, and subsequently evaporating the liquid carbon dioxide in equipment constructed of materials that are chemically inert to the extract. According to Laws et al, extracting hops using liquid carbon dioxide under the aforesaid controlled temperature conditions provides a primary hop extract comprising a mixture of alpha acids, beta acids and hop oil in major proportion. As taught in a related patent of Laws et al, U.S. Patent No. 4,212,895, the beta acids can readily be removed from the primary hop extract resulting by evaporating off the liquid carbon dioxide in equipment made of iron-free materials which are chemically inert to the extract, isomerizing the alpha-acids by boiling an alkaline aqueous solution of the primary hop extract, acidifying the resulting boiled solution to precipitate the beta acids, and filtering off the precipitated beta acids.

Finally, Grant U.S. Patent No. 4,507,329 teaches extracting a hops material with a solvent which comprises a two-component mixture, a first component (A) comprising essentially liquid carbon dioxide and a second component (B) comprising essentially at least one organic substance which: (i) is non-reactive with the alpha acids and (ii) has physical properties as follows: (a) is completely soluble in the liquid carbon dioxide at the operating conditions and concentrations employed, and (b) is itself a solvent for the alpha acids of interest, component (A) being present in the mixture in major proportion. The organic substance is said to enhance the solubility of the desired alpha acids in liquid carbon dioxide without appreciably altering the selectivity of the extraction for the alpha acids of interest.

As will be apparent from the above discussion of the prior art, none of the prior art procedures for extracting the alpha acids contents from hops were completely satisfactory since they provided either relatively low yield of the desired alpha acids and/or poor selectivity, relatively slow extraction time and/or required multiple extractions and/or post extraction treatments.

It is thus a primary object of the present invention to provide an improved process for isolating the purified alpha and beta acids contents of hops which overcomes the aforesaid and other disadvantages of the prior art.

Another object of the present invention is to provide an improved process for isolating the alpha acids contents of hops which process is characterized by high yield and high selectivity of the desired alpha acids. Further objects of the present invention are to provide a highly selectively, highly efficient process for isolating the alpha acid contents of hops, and a novel extraction system for use in the extraction of the alpha acids contents of hops. Still other objects of the invention will in part be obvious and will in part be apparent hereinafter.

The invention accordingly comprises the processes involving the several steps and the relation of one or more of such steps with respect to each other, and the system involving the several components, all of which are exemplified in the following detailed description, and the scope of the application, as will be indicated in the claims.

In the following detailed description of the present invention, the term "liquid carbon dioxide" refers to carbon dioxide (CO₂) in its liquid state. Carbon dioxide in its liquid state is available commercially as a compressed gas. The term "supercritical carbon dioxide" refers to carbon dioxide (CO₂) which is supercritical in the sense that the temperature is above the critical temperature of CO₂ (31.1°C), while its pressure is above the critical pressure (about 74 bar (73 atmospheres)).

Generally, the present invention combines the high efficiency of alpha acids extraction achieved by supercritical extraction techniques with the high selectivity for alpha acids values achieved by liquid extraction techniques by washing (extracting) the extract from the supercritical extraction of hops with an extraction fluid in the liquid state. Preferably the supercritical extraction fluid and the liquid extraction fluid comprise the same material, preferably carbon dioxide (CO₂). As applied to the preferred embodiment of the present invention, any residue recovered from the liquid CO₂ extraction may then be fed back into the main supercritical CO₂ extraction stream. Washing the supercritical extract with liquid CO₂ in accordance with the present invention removes undesirable compounds from the supercritical extract resulting in a higher purity recovery of alpha acids. Moreover, since "residue" recovered from the liquid CO₂ extraction may be returned to the main supercritical CO₂ extraction stream, no desirable alpha acids are lost. As a result, the present invention provides improved selectivity and higher yield than achieved by a supercritical CO₂ extraction or liquid CO₂ extraction by themselves.

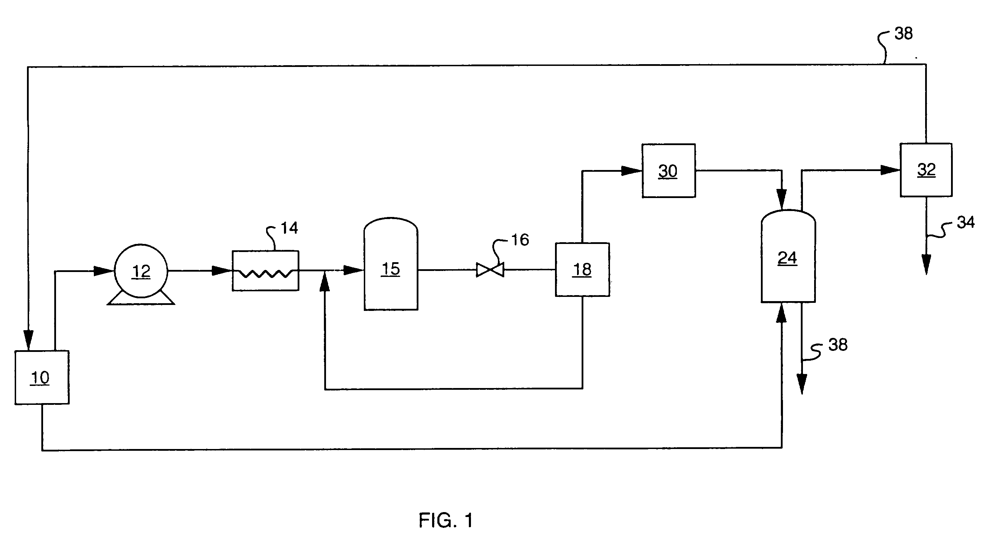

Still further features and advantages of the present invention will become apparent with reference to Figure 1 which illustrates diagrammatically a preferred extraction system in accordance with the present invention.

In accordance with the present invention, a supply of liquid carbon dioxide is held in tank 10. Tank 10 is connected through suitable conduits and a liquid gas pump 12 to a heat exchanger 14 where the CO₂ may be delivered and brought to supercritical conditions of temperature and pressure. The resulting supercritical fluid is then flowed into a pressure extractor 15 of conventional construction, which is formed with a heat jacket (not shown) and equipped with filter plates (not shown) for supporting the hops.

The supercritical CO₂ fluid is flowed through the hops where it performs the extraction function by picking up essentially the resin portions and essential oils to form the so-called "supercritical solution".

The extract laden fluid expands through a throttle valve 16 and passed into a precipitation tank 18. Tank 18 is equipped with a jacket (not shown) for heating or cooling. The pressure in tank 18 is maintained at less than critical pressure while the temperature can be maintained above or below critical. Separation takes place in tank 18. The separated CO₂ extraction medium is withdrawn from tank 18, and its temperature and pressure adjusted to supercritical and the supercritical CO₂ is then returned to pressure extractor 15, and the extraction is continued.

Supercritical hop extract is removed from tank 18 and passed to a holding tank 30 where the extract is warmed until fluid. The fluid hop extract is then withdrawn from holding tank 30 and pumped into the top of liquid CO₂ column 24 against the pressure of liquid CO₂ which is pumped from tank 10 into the bottom of column 24. The liquid CO₂ pumped into the bottom of column 24 passes upward in the column, countercurrent to the flow of hop extract downward in the column 24.

The extract laden liquid CO₂ containing resins and oils which are soluble in liquid CO₂ are withdrawn from the top of column 24 and passed through a pressure reducing system and separator 32 where the extract is separated from the CO₂, for example, by evaporation of the liquid CO₂, and the extract removed from the system via line 34.

The evaporated CO₂ is collected as overheads from separator 32, cooled and pressurized, and returned via conduit 38 to tank 10 for reuse. The purified extract is pumped from tank 32 to a heated holding tank (not shown).

Concurrently, liquid CO₂ and soluble components are withdrawn from the bottom of column 24 and passed via a conduit 38 to a storage tank (not shown) for subsequent processing as animal feed or for disposal.

The following examples, illustrative of principals of the present invention, are based on the supercritical extraction of hops using carbon dioxide as the extraction solvent followed by countercurrent washing of the extract from the supercritical extraction using liquid carbon dioxide. The basic procedure was to charge 275 to 325 kilograms aliquots of ground ((0.95 cm) 3/8'' to (0.64 cm) 1/4'' United States standard mesh) dried raw hops (Yakima cluster hops) to the pressure extractor vessel 15. The extractor vessel 15 was then closed, and the supercritical extraction fluid was flowed through the extractor vessel 15. All runs used supercritical carbon dioxide as the extraction fluid working at extraction pressures of 150 to 160 atmospheres and a temperature of 35° to 45°C. The extract laden fluid from extractor vessel 15 was then withdrawn and passed through throttle valve 16 into precipitation tank 18. Supercritical hop extract is removed from tank 18 and passed to holding tank 30 and there to column 24 where the extract is countercurrent washed with liquid CO₂ at ambient feed temperature of 25°C and at a pressure of 150 Bar.

The ground hops starting materials were analyzed prior to extraction and were found to contain 11 to 14% weight percent of alpha acids. The liquid CO₂ countercurrent washing was continuous at a rate of about 11 kg - 14 kg extract per hour. Extract solutions from countercurrent washing column 24 were concentrated in separator 32 by removing the CO₂ solvent by evaporation. The resulting concentrated extract was then analyzed by standard ASBC procedures (American Society of Brewing Chemists Methods of Analysis, 1978). For comparison, a sample of the supercritical extract was also analyzed before the supercritical extract was subjected to countercurrent washing with liquid CO₂.

### EXAMPLE I

Following the basic procedure described above, supercritical CO₂ of extract from extractor vessel 18 was warmed in tank 30, and pumped into extraction column 24 at 14 kg extract per hour and washed with liquid CO₂ flowing countercurrent at 40 kg hour at 25 deg.C. and 150 Bar, and the results recorded below:

| | |
|---|---|
| Wt. of Extract Processed | 14.8 kg. |
| Wt. of Extract Recovered | 11.2 kg. |
| Wt. of Raffinate | 3.6 kg. |

### EXAMPLE II

The procedure of Example I was repeated, except the liquid CO₂ flow rate was increased to 475 kg/hr, and the results recorded below:

| | |
|---|---|
| Wt. of Extract Processed | 14.6 kg. |
| Wt. of Extract Recovered | 12.0 kg. |
| Wt. of Raffinate | 2.6 kg. |

### EXAMPLE III

The process of Example II was repeated, except that the supercritical CO₂ extract flow rate was reduced to 13 kg/hr, and the results recorded below:

| | |
|---|---|
| Wt. of Extract Processed | 13.2 kg. |
| Wt. of Extract Recovered | 11.7 kg. |
| Wt. of Raffinate | 1.5 kg. |

### EXAMPLE IV

The process of Example III was repeated, except that the liquid CO₂ flow rate was raised to 550 kg/hr, and the results recorded below:

| | |
|---|---|
| Wt. of Extract Processed | 13.2 kg. |
| Wt. of Extract Recovered | 12.45 kg. |
| Wt of Raffinate | 0.75 kg. |

### EXAMPLE V

The process of Example I was repeated except that an extract essentially free of alpha acids was pumped into column 24 at 30 kg/hr. at a liquid CO₂ temperature of 25 deg.C. pressure 150 Bar and liquid CO₂ flow rate of 500 kg/hr, and the results recorded below:

| | |
|---|---|
| Wt. of Extract Processed | 28 kg. |
| Wt. of Extract Recovered | 13.8 kg. |
| Wt. of Raffinate | 14.2 kg. |

### EXAMPLE VI

The process of Example V was repeated, except that the liquid CO₂ flow rate was reduced to 300 kg/hr, and the results recorded below:

| | |
|---|---|
| Wt. of Extract Processed | 31.4 kg. |
| Wt. of Extract Recovered | 11.2 kg. |
| Wt. of Raffinate | 20.2 kg. |

### EXAMPLE VII

The process of Example VI was repeated, except that the extract feed rate to the column was reduced to 15 kg/hr., and the results recorded below:

| | |
|---|---|
| Wt. of Extract Processed | 17.6 kg. |
| Wt. of Extract Recovered | 11.4 kg. |
| Wt. of Raffinate | 6.2 kg. |

Examples of extract processed in accordance with the foregoing examples were then analyzed by HPLC, and the results recorded below:

| Examples I-IV | % Recovery | % alpha | % beta | Cohum. Ratio |
|---|---|---|---|---|
| Starting Supercritical CO₂ Extract | 100 | 55.28 | 18.51 | 23.5 |
| Example I | 70.5 | 51.45 | 24.21 | 25 |
| Example II | 85.3 | 57.34 | 21.98 | 24.8 |
| Example III | 94.2 | 58.79 | 20.88 | 24.4 |
| Example IV | 101.7 | 59.62 | 18.99 | 22.9 |

| Examples V-VII | Wt.yield Recovery | Alpha/beta Recovery | %beta-acids |
|---|---|---|---|
| Starting Base Extract | 100 | 100 | 43.6 |
| Example V | 60.1 | 49.5 | 53.0 |
| Example VI | 39.7 | 35.7 | 48.5 |
| Example VII | 84.7 | 64.8 | 57.0 |

The extract and raffinate from Examples V-VII were further analyzed by HPLC, and the results set forth below:

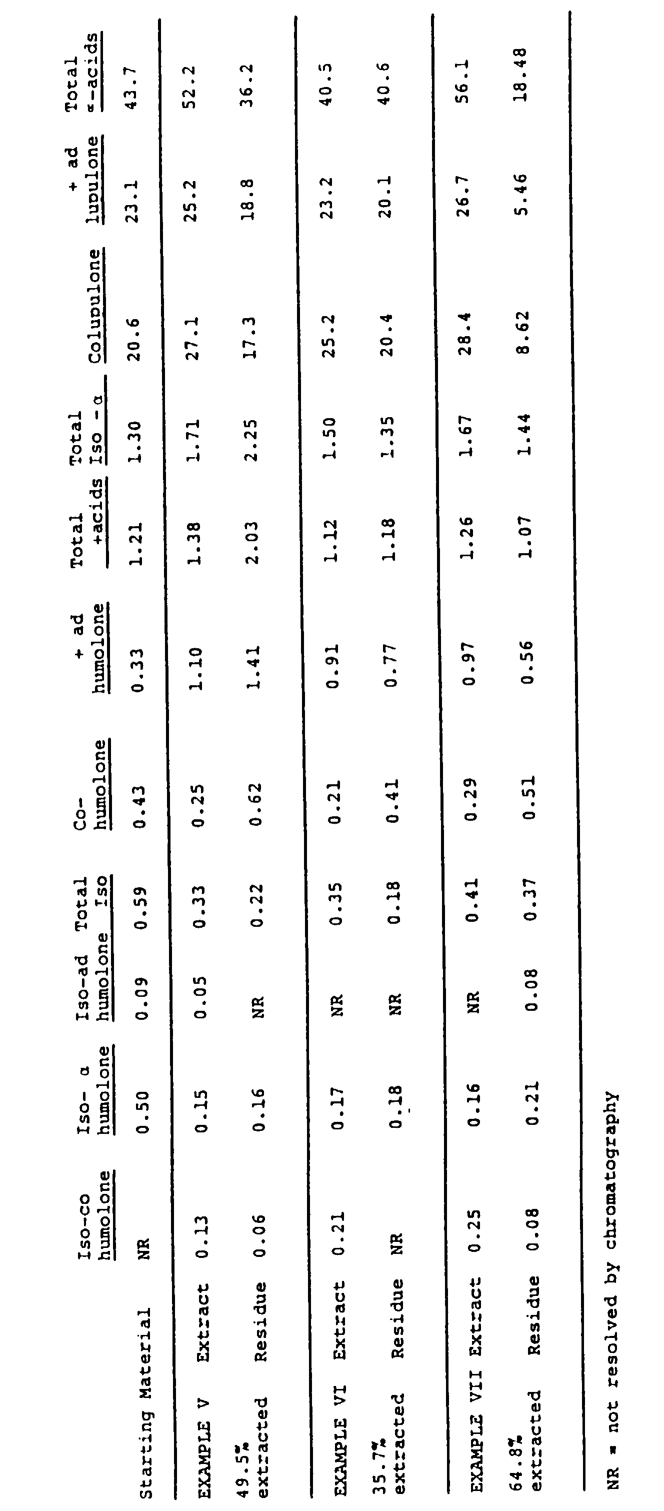

As can be seen from the foregoing, the present invention provides a novel and improved solvent extraction process and system for isolating alpha acids contents of hops. A particular feature and advantage of the present invention is that the extract resulting compares favorably in terms of selectivity to primary extracts obtained using liquid carbon dioxide extraction techniques, while it also compares favorably in terms of yield to primary extracts obtained using supercritical CO₂ extraction techniques. And, since the liquid CO₂ extraction is performed on the supercritical extract rather than the raw hops, the liquid CO₂ extraction facility could be made quite small. Thus, the added plant costs are quite minimal.

Various changes may be made without departing from the scope of the invention herein involved. For example, the invention advantageously may be employed for separating mixtures of other materials in which at least a portion may be taken up in a supercritical gas. Moreover, other gases may be used as the extraction medium such as CH₂ = CH₂, CH₃CH₃ and N₂O, either singly or in mixture with one or more of the other gases or with carbon dioxide. Also, the liquid extraction facility may be integrated with the supercritical extraction system as shown in Fig. 1, or the liquid extraction facility may be a constructed as a stand alone unit. It is therefore intended that all matters contained in the above description shall be interpreted in an illustrative and not in a limiting sense.

## Claims

1. An extraction process for solid materials by supercritical gas extraction wherein the materials are contacted with an extraction gas while maintaining the extraction gas in the supercritical state with respect to temperature and pressure, and separating the resulting supercritical extract from the supercritical extraction gas by reducing the pressure to a pressure below the critical pressure of the extraction gas, characterized by liquid extracting the supercritical extract with an extraction gas in the liquid state.

2. A process according to claim 1, and further characterized by one or more of the following features:
(a) the supercritical extraction and the liquid extraction are performed using the same gas;
(b) the supercritical extraction gas and the liquid extraction gas are selected from CO₂, CH₂ = CH₂, CH₃-CH₃ and N₂O;
(c) recovering residues from the liquid extraction, and recycling said residues to the supercritical extraction; and
(d) the supercritical extract is countercurrently washed by said liquid extraction gas.

3. A process according to claim 1 or claim 2, characterized in that the material being separated comprises hops, preferably dry ground hops.

4. A process according to claim 3, characterized by one or more of the following features:
(a) the supercritical extraction and the liquid extraction are performed using CO₂;
(b) the supercritical extract is separated from the supercritical extraction gas and stored prior to said liquid extraction; and
(c) the supercritical extract is separated from the supercritical extraction gas and concurrently passed to said liquid extraction.

5. A process according to claim 1, characterized in that said supercritical extraction is conducted in a pressure extractor, the supercritical extract laden supercritical extraction gas is withdrawn from the pressure extractor and passed into a precipitation tank which is maintained at less than critical pressure to separate the supercritical extract and the supercritical extraction gas; separately withdrawing the supercritical extraction gas and the supercritical extract from the precipitation tank, passing the supercritical extract into a liquid extraction column and subjecting the supercritical extract to extraction with an extraction gas in the liquid state, withdrawing extract laden liquid extraction gas from the column, separating the liquid extraction gas and recovering the extract.

6. A process according to claim 5, characterized in that the liquid extraction gas separated from the liquid extraction is adjusted to supercritical, and returned to the pressure extractor.

7. A process according to claim 6, characterized in that the liquid extraction gas is separated from the extract by evaporation, and the temperature and pressure of the separated gas is adjusted to supercritical prior to return to the pressure extractor.

8. An extraction system for solid materials comprising, in combination, a pressure extractor (15) for treating said mixture of materials with a supercritical gas extraction medium whereby to produce a supercritical extract laden supercritical extraction gas;
means for withdrawing the supercritical extract laden supercritical extraction gas from the pressure extractor and delivering same to a precipitation tank (18) which is maintained at less than critical pressure whereby to separate the supercritical extract and the supercritical extraction gas;
means for separately withdrawing the supercritical extraction gas and the supercritical extract from the precipitation tank, and for passing the supercritical extract to a liquid extraction column (24) wherein the extract is subjected to extraction with an extraction gas in the liquid state whereby to produce an extract laden liquid extraction gas;
means for withdrawing the extract laden liquid extraction gas from the liquid extraction column and for separating the liquid extraction gas and resulting extract, and
means (32) for separately recovering the liquid extraction gas and resulting extract.

9. A system according to claim 8, characterized in that said pressure extractor comprises filter plates for supporting said mixture of materials.

10. A system according to claim 8, characterized in that said means deliver the supercritical extract into the top of said liquid extraction column and the liquid extraction fluid into the bottom of the column.

11. A system according to claim 8, characterized by including means for separating the liquid extraction gas and resulting extract by evaporation, and for collecting the evaporated gas as overheads (38) and, if desired, including means (12, 14) for adjusting the temperature and pressure of the collected gas to supercritical, and for returning the adjusted gas to the pressure extractor.

## Patentansprüche

1. Extraktionsverfahren für feste Materialien durch superkritische Gasextraktion, bei dem die Materialien mit einem Extraktionsgas in Kontakt gebracht werden, während das Extraktionsgas hinsichtlich Temperatur und Druck im superkritischen Zustand gehalten wird, und der entstandene superkritische Extrakt durch Senkung des Drucks unter den kritischen Druck des Extraktionsgases von dem superkritischen Extraktionsgas getrennt wird, dadurch gekennzeichnet, daß der superkritische Extrakt mit einem Extraktionsgas im flüssigen Zustand flüssigextrahiert wird.

2. Verfahren nach Anspruch 1, ferner gekennzeichnet durch eines oder mehrere der folgenden Merkmale:
(a) Die superkritische Extraktion und die Flüssigextraktion werden unter Verwendung desselben Gases durchgeführt;
(b) das superkritische Extraktionsgas und das flüssige Extraktionsgas sind ausgewählt aus CO₂, CH₂=CH₂, CH₃=CH₃ und N₂O;
(c) Rückgewinnung von Rückständen aus der Flüssigextraktion und Wiederverwertung der Rückstände in der superkritischen Extraktion; und
(d) der superkritische Extrakt wird mit dem flüssigen Extraktionsgas im Gegenstrom gewaschen.

3. Verfahren nach Anspruch 1 oder 2, dadurch gekennzeichnet, daß das zu trennende Material Hopfen, vorzugsweise trockenen, gemahlenen Hopfen, umfaßt.

4. Verfahren nach Anspruch 3, gekennzeichnet durch eines oder mehrere der folgenden Merkmale:
(a) Die superkritische Extraktion und die Flüssigextraktion werden unter Verwendung von CO₂ durchgeführt;
(b) der superkritische Extrakt wird von dem superkritischen Extraktionsgas getrennt und vor der Flüssigextraktion gelagert, und
c) der superkritische Extrakt wird von dem superkritischen Extraktionsgas getrennt und gleichzeitig zur Flüssigextraktion weitergeleitet.

5. Verfahren nach Anspruch 1, dadurch gekennzeichnet, daß die superkritische Extraktion in einem Druckextraktor durchgeführt wird, daß das mit dem superkritischen Extrakt beladene superkritische Extraktionsgas aus dem Druckextraktor abgezogen und in ein Fällgefäß geleitet wird, das zur Trennung des superkritischen Extrakts und des superkritischen Extraktionsgases bei einem Druck unterhalb des kritischen Druckes gehalten wird; separates Abziehen des superkritischen Extraktionsgases und des superkritischen Extraktes aus dem Fällgefäß, Weiterleiten des superkritischen Extraktes in eine Flüssigextraktionssäule und Extrahieren des superkritischen Extraktes mit einem Extraktionsgas im flüssigen Zustand, Abziehen des mit Extrakt beladenen flüssigen Extraktionsgases aus der Säule, Abtrennen des flüssigen Extraktionsgases und Rückgewinnung des Extraktes.

6. Verfahren nach Anspruch 5, dadurch gekennzeichnet, daß das von der Flüssigextraktion abgetrennte flüssige Extraktionsgas auf superkritisch eingestellt und in den Druckextraktor zurückgeführt wird.

7. Verfahren nach Anspruch 6, dadurch gekennzeichnet, daß das flüssige Extraktionsgas durch Verdampfen von dem Extrakt getrennt wird und Temperatur und Druck des abgetrennten Gases vor der Rückführung in den Druckextraktor auf superkritisch eingestellt werden.

8. Extraktionssystem für feste Materialien, das folgende Komponenten in Kombination umfaßt: Einen Druckextraktor (15) zur Behandlung des Materialgemisches mit einem superkritischen Gasextraktionsmedium, so daß ein mit superkritischem Extrakt beladenes superkritisches Extraktionsgas entsteht;
eine Vorrichtung zum Abziehen des mit superkritischem Extrakt beladenen superkritischen Extraktionsgases aus dem Druckextraktor und Weiterleiten dieses Extraktionsgases in ein Fällgefäß (18), dessen Druck unterhalb des kritischen Druckes gehalten wird, so daß der superkritische Extrakt und das superkritische Extraktionsgas getrennt werden;
eine Vorrichtung zum separaten Abziehen des superkritischen Extraktionsgases und des superkritischen Extraktes aus dem Fällgefäß und zum Weiterleiten des superkritischen Extraktes in eine Flüssigextraktionssäule (24), worin der Extrakt mit einem Extraktionsgas im flüssigen Zustand extrahiert wird, so daß ein mit Extrakt beladenes flüssiges Extraktionsgas entsteht;
eine Vorrichtung zum Abziehen des mit Extrakt beladenen flüssigen Extraktionsgases aus der Flüssigextraktionssäule und zum Trennen des flüssigen Extraktionsgases und des entstandenen Extraktes; und
eine Vorrichtung (32) zur separaten Rückgewinnung des flüssigen Extraktionsgases und des entstandenen Extraktes.

9. System nach Anspruch 8, dadurch gekennzeichnet, daß der Druckextraktor Filterplatten als Träger für das Materialgemisch umfaßt.

10. System nach Anspruch 8, dadurch gekennzeichnet, daß die Vorrichtungen den superkritischen Extrakt in den oberen Teil der Flüssigextraktionssäule und das flüssige Extraktionsfluid in den unteren Teil der Säule leiten.

11. System nach Anspruch 8, dadurch gekennzeichnet, daß es Vorrichtungen zur Trennung des flüssigen Extraktionsgases und des entstandenen Extraktes durch Verdampfen und zum Auffangen des verdampften Gases als Kopfprodukt (38) sowie gegebenenfalls Vorrichtungen (12, 14) zur Einstellung der Temperatur und des Druckes des aufgefangenen Gases auf superkritisch und zur Rückführung des so eingestellten Gases in den Druckextraktor umfaßt.

## Revendications

1. Procédé pour séparer des matières solides par extraction par un gaz supercritique, dans lequel les matières sont mises en contact avec un gaz d'extraction tout en maintenant le gaz d'extraction à l'état supercritique en ce qui concerne la température et la pression, et en séparant l'extrait supercritique obtenu du gaz d'extraction supercritique en réduisant la pression jusqu'à atteindre une pression inférieure à la pression critique du gaz d'extraction, caractérisé par l'extraction par un liquide de l'extrait supercritique avec un gaz d'extraction à l'état liquide.

2. Procédé selon la revendication 1, et caractérisé en outre par une ou plusieurs des caractéristiques suivantes :
(a) l'extraction supercritique et l'extraction liquide sont réalisées en utilisant le même gaz ;
(b) le gaz d'extraction supercritique et le gaz d'extraction liquide sont choisis parmi CO₂, CH₂ = CH₂, CH₃ - CH₃ et N₂O ;
(c) la récupération des résidus de l'extraction liquide, et le recyclage desdits résidus vers l'extraction supercritique ; et
(d) l'extrait supercritique est lavé à contre-courant par ledit gaz d'extraction liquide.

3. Procédé selon la revendication 1 ou la revendication 2, caractérisé en ce que la matière séparée comprend du houblon, de préférence du houblon broyé à sec.

4. Procédé selon la revendication 3, caractérisé par une ou plusieurs des caractéristiques suivantes :
(a) l'extraction supercritique et l'extraction liquide sont réalisées en utilisant du CO₂ ;
(b) l'extrait supercritique est séparé du gaz d'extraction supercritique et stocké avant ladite extraction liquide ; et
(c) l'extrait supercritique est séparé du gaz d'extraction supercritique et est également envoyé vers ladite extraction liquide.

5. Procédé selon la revendication 1, caractérisé en ce que ladite extraction supercritique est réalisée dans un extracteur sous pression, le gaz d'extraction supercritique chargé en extrait supercritique est soutiré de l'extracteur sous pression et envoyé dans une cuve de précipitation qui est maintenue à une pression inférieure à la pression critique pour séparer l'extrait supercritique et le gaz d'extraction supercritique ; en soutirant séparément le gaz d'extraction supercritique et l'extrait supercritique de la cuve de précipitation, en envoyant l'extrait supercritique dans une colonne d'extraction liquide et en soumettant l'extrait supercritique à une extraction avec un gaz d'extraction à l'état liquide, en soutirant le gaz d'extraction liquide chargé en extrait de la colonne, en séparant le gaz d'extraction liquide et en recueillant l'extrait.

6. Procédé selon la revendication 5, caractérisé en ce que le gaz d'extraction liquide séparé à partir de l'extraction liquide est ajusté pour être supercritique, et renvoyé vers l'extracteur sous pression.

7. Procédé selon la revendication 6, caractérisé en ce que le gaz d'extraction liquide est séparé de l'extrait par évaporation, et la température et la pression du gaz séparé sont réglées de façon à être supercritiques avant le renvoi vers l'extracteur sous pression.

8. Système d'extraction pour des matières solides comprenant, en combinaison, un extracteur sous pression (15) pour traiter ledit mélange de matières à l'aide d'un milieu d'extraction gazeux supercritique, pour ainsi produire un gaz d'extraction supercritique chargé en extrait supercritique ;
des moyens pour soutirer le gaz d'extraction supercritique chargé en extrait supercritique de l'extracteur sous pression et l'amener jusqu'à une cuve de précipitation (18) qui est maintenue à une pression inférieure à la pression critique, pour ainsi séparer l'extrait supercritique et le gaz d'extraction supercritique ;
des moyens pour soutirer séparément le gaz d'extraction supercritique et l'extrait supercritique de la cuve de précipitation, et pour envoyer l'extrait supercritique vers une colonne d'extraction liquide (24) dans laquelle l'extrait est soumis à une extraction avec un gaz d'extraction à l'état liquide, pour ainsi produire un gaz d'extraction liquide chargé en extrait ;
des moyens pour soutirer le gaz d'extraction liquide chargé en extrait de la colonne d'extraction liquide et pour séparer le gaz d'extraction liquide et l'extrait obtenu, et
des moyens (32) pour recueillir séparément le gaz d'extraction liquide et l'extrait obtenu.

9. Système selon la revendication 8, caractérisé en ce que ledit extracteur sous pression comprend des plaques filtrantes pour supporter ledit mélange de matières.

10. Système selon la revendication 8, caractérisé en ce que lesdits moyens amènent l'extrait supercritique dans la partie supérieure de ladite colonne d'extraction liquide et le fluide d'extraction liquide dans la partie inférieure de la colonne.

11. Système selon la revendication 8, caractérisé en ce qu'il comprend des moyens pour séparer le gaz d'extraction liquide et l'extrait obtenu par évaporation, et pour recueillir le gaz évaporé en tant que fraction de tête (38) et, si on le souhaite, comprenant des moyens (12, 14) pour régler la température et la pression du gaz recueilli de façon à ce qu'elles soient supercritiques, et pour renvoyer le gaz ainsi réglé vers l'extracteur sous pression.
